# EUROPÄISCHE PATENTSCHRIFT

(11) **EP 2 405 166 B1**
(45) Veröffentlichungstag und Bekanntmachung des Hinweises auf die Patenterteilung: **13.09.2017**
(21) Anmeldenummer: 11172860.6
(22) Anmeldetag: 06.07.2011
(51) Int. Cl.: F16K 31/00, F16K 31/06

(54) **Magnetimpulsventil**
Magnetic impulse valve
Soupape électromagnétique

(30) Priorität: 08.07.2010 DE 102010027456
(43) Veröffentlichungstag der Anmeldung: 11.01.2012
(73) Patentinhaber: Technische Universität Ilmenau, 98693 Ilmenau (DE); AZ Vermögensverwaltung GmbH & Co. KG, 61276 Weilrod (DE)
(72) Erfinder: Risto, Uwe, 99086 Erfurt (DE); Zentner, Lena, 98693 Ilmenau (DE); Uhlig, René, 98693 Ilmenau (DE); Zimmermann, Dirk, Weilrod 61276 (DE)
(74) Vertreter: Engel, Christoph Klaus

(56) Entgegenhaltungen:
- EP-A1- 1 471 264
- WO-A2-98/32412
- DE-A1- 2 910 660
- GB-A- 2 387 968
- US-A- 3 426 800

## Beschreibung

Die Erfindung betrifft ein Magnetimpulsventil, bei dem zur Reduzierung der erforderlichen Gesamtenergie ein sogenannter mechanischer Durchschlageffekt ausgenutzt wird. Verwendung findet dieses Ventil in der Rohrleitungstechnik, vorzugsweise im Bereich gasförmiger Medien.

Mit dem Begriff "mechanischer Durchschlageffekt" wird im Folgenden der sprunghafte Übergang von einer ersten mechanisch stabilen Lage in eine zweite mechanisch stabile Lage infolge der Einwirkung einer kritischen äußeren Last bezeichnet. Bezogen auf das Schaltverhalten des Ventils bewirkt dieser Effekt ein sprunghaftes Öffnen bzw. Schließen des Ventils.

Schließmechanismen für Rohrleitungen werden im Allgemeinen eingesetzt, um den Ein- und Auslass von Medien zu kontrollieren und dabei die Fließrichtung zu steuern und zu regulieren. Je nach Einsatzzweck unterscheiden sich die Schließsysteme in der Art ihrer Betätigung. Manuell betätigte Ventile findet man vorrangig in Anwendungsbereichen, bei denen eine permanente Regelung des Strömungsmediums nicht zwingend für die Funktionsfähigkeit einer Anlage erforderlich ist.

Für Anwendungen, bei denen eine ständige und automatisierte Regelung und Steuerung von Stoffflüssen erforderlich ist, werden in vielen Fällen aktuatorisch betätigte Ventile eingesetzt. Weit verbreitet sind dabei Magnetventilsysteme wie sie beispielweise in AT 381 575 B, DE 38 14 765 C2 u.a. beschrieben werden. Diese nutzen für die Betätigung elektrische Energie. Für den Übergang des Magnetventils von einem Schaltzustand in einen anderen Schaltzustand ist zunächst ein Anzugsstrom erforderlich, der in der Regel höher ist als der Haltestrom. Der Haltestrom bewirkt, dass das Ventil nach dem Schalten im gewünschten Schaltzustand verbleibt. Je nach Einschaltdauer ergibt sich dadurch ein Energieverbrauch, der sich, im Hinblick auf den millionenfachen Einsatz von Magnetimpulsventilen, zu einem erheblichen Gesamtenergiebedarf aufsummiert.

Direktwirkende 2/2-Wege-Magnetventile besitzen zwei Anschlüsse (Ein- und Auslass) und ermöglichen zwei verschiedene Schaltzustände (offen, geschlossen). Im Inneren des Ventils befindet sich ein Verschlusskörper, der über einen elektrischen Hubankermagneten geschaltet werden kann. Bei 2/2-Wege-Magnetventilen existieren im stromlosen Zustand, je nach Ausführung, zwei mögliche Betriebszustände. Für Anwendungen, bei denen das Ventil zeitlich gesehen länger im geöffneten Zustand als im geschlossenen Zustand betrieben wird, empfiehlt sich der Einsatz von stromlos geöffneten Magnetimpulsventilen. Ist es aus Sicherheitsgründen erforderlich einen Volumenstrom bei Ausfall der Stromversorgung abzusperren, werden stromlos geschlossene Ventile verwendet.

Aus der DE 101 37 307 A1 ist ein Rohrbruchventil zum Absperren eines Rohrabschnittes bekannt. Bei dieser Vorrichtung wird der Schließkörper über eine elektromagnetische Spule bewegt. Zudem kann das Ventil selbsttätig schließen, wenn der Volumenstrom im Rohrleitungssystem über einen vorher festgelegten Grenzwert steigt. Der Schließkörper dieses Ventils bildet den für den Elektromagneten notwendigen Anker. Bei elektrischer Aktivierung der Spule wird der Schließkörper mit der Kraft des Elektromagneten in den Ventilsitz gezogen und gehalten.

In DE 10 2007 032 550 A1 wird eine Sicherheitsabsperr-vorrichtung beschrieben, die unter minimalem Einsatz von Bauteilen ein selbsttätiges Verschließen der Rohrleitung ab einem bestimmten Grenzwert des Volumenstroms durch die Vorrichtung ermöglicht. Dieses Ventil erlaubt sowohl eine horizontale als auch eine vertikale Einbaulage im Rohrleitungssystem.

In der Offenlegungsschrift DE 197 20 849 A 1 wird ein 3/2 Wegeventil beschrieben, welches einen Verschlusskörper aufweist, der über einen länglichen Träger und eine Federeinrichtung mit dem Ventilgehäuse verbunden ist. Dieses Ventil erlaubt es, zwischen zwei Schaltstellungen umzuschalten.

Die GB 2 387 968 A zeigt ein Magnetventil mit einer Kammer, einem innerhalb der Kammer angeordneten Magnetanker mit einem Verschlusskörper, Permanentmagneten mit Polstücken zum Erzeugen entgegengesetzter Magnetfelder quer zur Richtung der Ankerbewegung sowie einer Spule. Permanentmagneten und Spule dienen zur Realisierung eines bistabilen Schaltverhaltens. Am Anker können Blattfedern angeordnet sein, welche den Anker im unbestromten Zustand in einer zentralen Position zwischen zwei gegenüberliegenden Ventilsitzen innerhalb der Kammer vorspannen. Im bestromten Zustand bewegt sich das Verschlusselement zu einem der beiden Ventilsitze, wobei die Blattfedern in Richtung des Ventilsitzes gebogen werden.

Die DE 29 10 660 A1 beschreibt ein Magnetventil mit einem Magnetkopf, einem Ventilkörper und einer Kammer, die von zwei Magnetkernen begrenzt ist. In der Kammer ist ein Magnetanker mit einem Dichtbolzen gegen die Kraft einer Feder bewegbar angeordnet. Bei Stromfluss wird der Magnetanker entgegen der Federkraft in Richtung Magnetkern gezogen.

Die US 3,426,800 A1 befasst sich mit einem bistabilen Fluidventil mit einem Ventilelement, welches zwei stabile Zustände einnehmen kann. Das Ventilelement umfasst ein flexibles Element, welches in einem der beiden Zustände eine S-Form und in dem anderen der beiden Zustände eine umgekehrt S-Form aufweist. Der Übergang von dem einen in den anderen der beiden Zustände erfolgt durch einen mittels Fluid ausgeübten Druck. Das Ventil kann zusätzliche Elektromagneten aufweisen, um auf das flexible Element im bestromten Zustand eine Kraft auszuüben, wodurch dieses seine Form ändert.

Der Erfindung liegt die Aufgabe zugrunde, ein neuartiges Magnetimpulsventil bereitzustellen, das mit einfachem und kostengünstigem Aufbau zwei Schaltzustände - "Offen" und "Geschlossen" - ohne zusätzliche Energiezufuhr halten kann. Erfindungsgemäß gelingt die Lösung dieser Aufgabe mit den Merkmalen des ersten Patentanspruches. Vorteilhafte Ausgestaltungen sind in den Unteransprüchen angegeben.

Ein erfindungsgemäßes Magnetimpulsventil umfasst einen Grundkörper, in dem sich ein Dichtsitz und ein Verschlusskörper aus magnetischem Material, wobei der Verschlusskörper zumindest teilweise aus einem Permanentmagnet besteht und mit Außenmaßen größer als die des Dichtsitzes befinden. Weiterhin ist zumindest eine erste Spule vorgesehen, die im Grundkörper ein magnetisches Feld erzeugt. Der Grundkörper besitzt in seinem Inneren elastische Aufhängungselemente, an denen der Verschlusskörper befestigt und beweglich gelagert ist. Die Aufhängungselemente gehen bei einer bestimmten Krafteinwirkung von einer ersten mechanisch stabilen Form in eine zweite mechanisch stabile Form über.

Der grundlegende Ansatz für die erfindungsgemäße Lösung besteht darin, dass die erforderlichen Haltekräfte bei dem vorgeschlagenen Magnetimpulsventil durch die Formgebung der Aufhängungselemente, an denen der Verschlusskörper befestigt ist, erzeugt werden. Es ist lediglich eine Anschubkraft notwendig, um das Ventil von einem Schaltzustand in einen anderen Schaltzustand zu bewegen. Das erfindungsgemäße Magnetimpulsventil hat gegenüber herkömmlichen Magnetventilen somit den Vorteil, dass nur für den Anreißmoment Energie benötigt wird. Aufgrund der kurzen Einschaltdauer (< 1 s) ergibt sich selbst bei häufigem Schalten (100-mal pro Tag) ein Energiebedarf, der mehr als 100-mal geringer ausfällt, als der eines herkömmlichen Magnetventils. Die geringere Stromaufnahme führt außerdem zu einer verminderten Wärmeaufnahme des Gerätes und somit zu reduzierten Folgekosten im technischen Einsatz für die Temperierung von Schaltanlagen.

Durch die geschlossene Bauform des erfindungsgemäßen Magnetimpulsventils ist eine direkte Integration in eine Rohrleitung denkbar. Außerdem ermöglicht der Wegfall von Ventilaufbauten eine einfachere und platzsparendere Gestaltung der Anlagen. Zudem werden im Bereich von explosionsgefährdeten Anlagen durch die geschlossene Bauform Funkenstrecken vermieden.

Aus umweltpolitischer Sicht lässt sich das erfindungsgemäße Magnetimpulsventil aufgrund seines einfachen Aufbaus Ressourcen schonend herstellen und betreiben. Im Falle der Wiederverwertung wird durch eine Herstellung, z.B. im Spritzgussverfahren, eine einfache stoffliche Trennung sichergestellt.

Bevorzugt weisen die Aufhängungselemente (4) eine geometrische Form auf, mit der ein bistabiles Schaltverhalten realisiert werden kann. Eine andere Ausführungsform des Magnetimpulsventils verwendet Aufhängungselemente, die eine geometrische Form aufweisen, mit der ein monostabiles Schaltverhalten realisiert werden kann.

Bei einer bevorzugten Ausführungsform bilden die eine bzw. die mehreren Spulen eine Antriebseinheit, während der Grundkörper, der Dichtsitz, der Verschlusskörper mit einem Permanentmagnet, die elastischen Aufhängungselemente und eine ggf. vorhandene weitere Verengung ein Verschlusssystem bilden. Dabei sind die Antriebseinheit und das Verschlusssystem modular aufgebaut und separat voneinander in das Leitungssystem einbaubar. Die Antriebseinheit kann in einer besonderen Ausführung vom Verschlusssystem abgekoppelt und außerhalb des Leitungssystems positioniert sein, beispielsweise als Hülse, die auf den Grundkörper aufgeschoben wird. Dabei ist die Antriebseinheit so zu positionieren, dass das von den Spulen erzeugte Magnetfeld ausreichend große Kräfte auf den Verschlusskörper ausüben kann, um diesen in die jeweiligen Schaltpositionen zu bewegen.

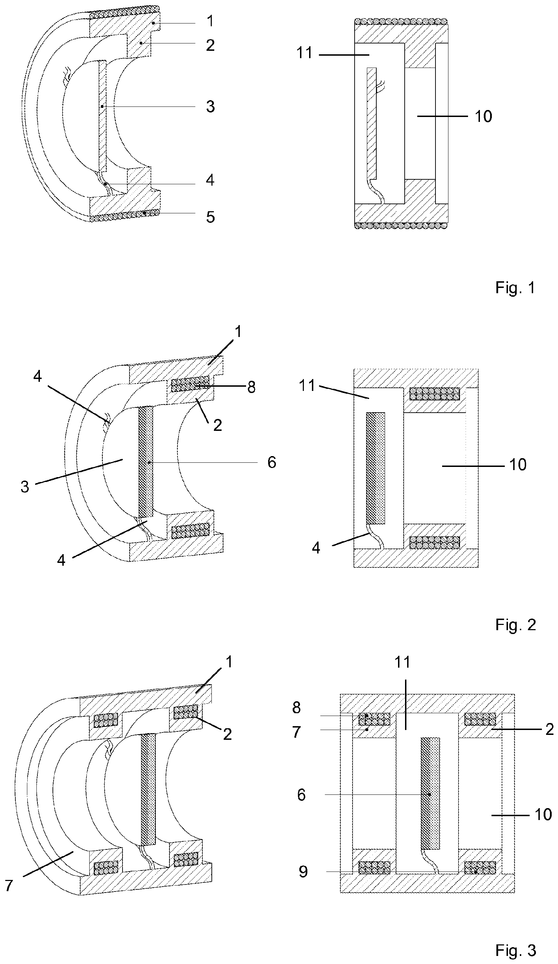

Eine detaillierte Beschreibung und weitere Vorteile der Erfindung sind dem nachfolgenden Beschreibungsteil zu entnehmen, in dem die Erfindung unter Bezugnahme auf die beigefügten Zeichnungen näher erläutert wird. Es zeigt:
- Fig. 1: - eine prinzipielle Ausführung eines Magnetimpulsventils die nicht Teil der Erfindung ist, im geöffneten Schaltzustand in einer perspektivischen Schnittansicht und in einer Längsschnittansicht;
- Fig. 2: - eine erste prinzipielle Ausführung des erfindungsgemäßen Magnetimpulsventils im geöffneten Zustand in einer perspektivischen Schnittansicht und in einer Längsschnittansicht;
- Fig. 3: - eine zweite prinzipielle Ausführung des erfindungsgemäßen Magnetimpulsventils im geöffneten Zustand in einer perspektivischen Schnittansicht und in einer Längsschnittansicht;
Ein bekanntes Magnetimpulsventil besteht, wie in Fig. 1 gezeigt, aus einem vorzugsweise zylinderförmigen Grundkörper (1). In diesen ist ein weiterer kleinerer Zylinder mit einer Durchlassöffnung (10) eingesetzt. Dieser wird als Dichtsitz (2) bezeichnet. Grundkörper (1) und Dichtsitz (2) können einstückig ausgebildet sein. Im Inneren des Grundkörpers (1) befindet sich ein Verschlusskörper (3), der über ein oder vorzugsweise mehrere elastische Aufhängungselemente (4), die an der Innenwand des Grundkörpers (1) befestigt sind, beweglich gelagert ist. Der Außendurchmesser des Verschlusskörpers (3) ist größer als der Innendurchmesser des Dichtsitzes (2), sodass der vom Verschlusskörper (3) eingenommene Querschnitt größer ist als der Querschnitt der innerhalb des Dichtsitzes (2) frei gelassenen Durchlassöffnung (10). Der Verschlusskörper (3) ist axial vom Dichtsitz (2) bzw. der darin befindlichen Durchlassöffnung (10) beabstandet. Die Aufhängungselemente (4) erstrecken sich nicht über den gesamten Umfang des Verschlusskörpers (3), sodass im Querschnitt zwischen der Innenwand des Grundkörpers (1) und dem Verschlusskörper (3) ein Durchströmungskanal (11) verbleibt.

In diesem Beispiel ist um den Grundkörper (1) herum eine erste Spule (5) in axialer Richtung gewickelt. Diese Spule (5) wird nun so bestromt, dass ein Magnetfeld entsteht, welches den Verschlusskörper (3) axial in Richtung des Dichtsitzes (2) bewegt. Durch das Magnetfeld wirkt demnach eine Kraft auf den Verschlusskörper (3). Unter Einwirkung dieser Kraft verformen sich die elastischen Aufhängungselemente (4), wobei sie bis zu einer bestimmten Kraft formstabil bleiben und eine kontinuierliche Bewegung des Verschlusskörpers (3) in Richtung des Dichtsitzes (2) zulassen. Bei einer weiteren Verstärkung des Magnetfeldes erhöht sich auch die Kraftwirkung auf den Verschlusskörper (3).

Konstruktiv bedingt wird die Form der Aufhängungselemente (4), an denen der Verschlusskörper (3) befestigt ist, ab einer bestimmten Kraft - instabil, sodass ein sprunghafter Übergang von einer ersten mechanisch stabilen Form in eine zweite mechanisch stabile Form stattfindet (mechanischer Durchschlageffekt). Dadurch wird der Verschlusskörper (3) sprungförmig in Richtung des Dichtsitzes (2) bewegt, bis er auf diesem aufliegt und das Ventil somit verschließt. Wird danach die Energiezufuhr abgeschaltet, bleibt das Ventil aufgrund der zweiten mechanisch stabilen Form der elastischen Aufhängungselemente (4) verschlossen.

Um das Ventil nun wieder zu öffnen, wird die erste Spule (5) in umgekehrter Richtung bestromt, wodurch der Verschlusskörper (3) vom Dichtsitz gelöst wird. Der Öffnungsvorgang geschieht prinzipiell auf die gleiche Weise wie der Verschlussvorgang. Die Stärke des Magnetfeldes steigt soweit an, bis die elastischen Aufhängungselemente (4) mechanisch instabil werden und der Verschlusskörper (3) aufgrund des mechanischen Durchschlageffektes in die Ausgangsposition zurückspringt, in welcher das Ventil dauerhaft geöffnet ist.

Die elastischen Aufhängungselemente (4) weisen erfindungsgemäß eine solche Form auf, dass sie unter Einwirkung einer bestimmten Kraft von einer ersten mechanisch stabilen Form in eine zweite mechanisch stabile Form zum wahlweisen Öffnen und Schließen des Ventils übergehen können (mechanischer Durchschlageffekt). Dies kann z. B. mit zwei entgegengesetzten, aufeinander folgenden Bogensegmenten realisiert werden. Vorzugsweise ist der Verschlusskörper (3) an mehreren am Umfang verteilten Aufhängungselementen (4) angebracht, die beispielsweise jeweils um 120° versetzt sind.

Fig. 2 zeigt eine erste Ausführung des erfindungsgemäßen Magnetimpulsventils im geöffneten Zustand. Diese erste Ausführungsform zeichnet sich dadurch aus, dass anstelle der außen am Grundkörper (1) angebrachten ersten Spule (5) eine zweite Spule (8) direkt in den Dichtsitz (2) integriert ist und dass der Verschlusskörper (3) zum Teil aus einem Permanentmagneten (6) besteht. Durch den Permanentmagneten (6) wird die Wirkung des Magnetfeldes der Spule verstärkt, wodurch im Vergleich zum ersten Ausführungsbeispiel ein geringerer Energieaufwand erforderlich wird. Das Verschließen und Öffnen des Magnetimpulsventils erfolgt auf die gleiche Weise, wie bereits für das erste Ausführungsbeispiel beschrieben. Der mit dem Permanentmagneten (6) bestückte Verschlusskörper (3) kann bei abgewandelten Ausführungen auch mit der außen am Grundkörper angebrachten ersten Spule (5) zusammenwirken. Ebenso sind Ausführungsformen möglich, die sowohl die erste Spule (5) als auch die zweite Spule (8) verwenden oder bei denen die integrierte zweite Spule (8) mit einem Verschlusskörper (3) ohne Permanentmagnetunterstützung zusammenwirkt.

Fig. 3 zeigt eine zweite Ausführungsform des erfindungsgemäßen Magnetimpulsventils im geöffneten Zustand. Hierbei wird eine weitere Verengung (7) in den Grundkörper (1) eingearbeitet, derart dass der Verschlusskörper (3) axial zwischen der weiteren Verengung (7) und dem Dichtsitz (2) positioniert ist. In den Dichtsitz (2) ist wiederum die zweite Spule (8) und in die Verengung (7) eine dritte Spule (9) eingearbeitet. Der Verschlusskörper (3) besteht auch hier zum Teil aus einem Permanentmagneten (6).

Die dritte Spule (9) wird nun so bestromt, dass ein Magnetfeld entsteht, welches den Verschlusskörper (3) in Richtung des Dichtsitzes (2) drückt. Die zweite Spule (8) im Dichtsitz (2) wird wiederum so bestromt, dass der Verschlusskörper (3) angezogen wird. Das heißt, die beiden Spulen werden jeweils in gleicher Richtung bestromt, wobei durch die Wirkung des Permanentmagneten (6) zwei Effekte auftreten, die sich in axialer Kraftrichtung addieren. Zum einen das Abstoßen der Magnetfelder der dritten Spule (9) und des Permanentmagneten (6) bei gleicher Polung und das Anziehen der magnetischen Felder der zweiten Spule (8) und des Permanentmagneten (6) bei entgegengesetzter Polung. Mit dieser Ausführungsform des erfindungsgemäßen Magnetimpulsventils kann die Krafteinwirkung auf den Verschlusskörper (3) nochmals erhöht werden. Das Verschließen und Öffnen erfolgt nach dem bereits beschriebenen Prinzip. Auch hier sind Kombinationen mit den Merkmalen der oben beschriebenen Ausführung möglich. Vorzugsweise sind die Aufhängungselemente (4) so ausgebildet, dass der Verschlusskörper (3) drei stabile, axial voneinander beabstandete Positionen einnehmen kann, um entweder am Dichtsitz (2) oder an der Verengung (7) anzuliegen oder zwischen diesen beiden positioniert zu sein und damit den Durchströmkanal (11) freizugeben.

### Bezugszeichenliste

- 1: - Grundkörper
- 2: - Dichtsitz
- 3: - Verschlusskörper
- 4: - elastische Aufhängungselemente
- 5: - erste Spule
- 6: - Permanentmagnet
- 7: - Verengung
- 8: - zweite Spule
- 9: - dritte Spule
- 10: - Durchlassöffnung
- 11: - Durchströmungskanal

## Patentansprüche

1. Magnetimpulsventil für den Einsatz in Leitungssystemen umfassend
- ein Verschlusssystem, welches gebildet ist durch einen Grundkörper (1), in dem sich ein Dichtsitz (2) mit einer axialen Durchlassöffnung (10) und ein magnetisierbarer Verschlusskörper (3) mit Außenmaßen größer als die Durchlassöffnung (10) des Dichtsitzes (2) befinden, wobei der Verschlusskörper (3) zumindest teilweise aus einem Permanentmagnet besteht, wobei der Grundkörper (1) in seinem Inneren ein oder mehrere elastische Aufhängungselemente (4) aufweist, an denen der Verschlusskörper (3) befestigt und beweglich gelagert ist, wobei die Aufhängungselemente (4) bei einer bestimmten Krafteinwirkung von einer ersten mechanisch stabilen Form in eine zweite mechanisch stabile Form übergehen,
- eine Antriebseinheit, welche durch zumindest eine Spule (5, 8) gebildet ist, die im Grundkörper (1) ein auf den Verschlusskörper (3) einwirkendes magnetisches Feld erzeugt,
wobei die Antriebseinheit und das Verschlusssystem modular aufgebaut und separat voneinander in das Leitungssystem einbaubar sind.

2. Magnetimpulsventil nach Anspruch 1 **dadurch gekennzeichnet, dass** die Aufhängungselemente (4) eine geometrische Form aufweisen, mit der ein bistabiles Schaltverhalten realisiert werden kann.

3. Magnetimpulsventil nach Anspruch 1 oder 2, **dadurch gekennzeichnet, dass** der Verschlusskörper (3) in einem geöffneten Zustand des Magnetventils axial vom Dichtsitz (2) beabstandet ist, sodass ein Durchströmungskanal (11) ausgebildet ist, der in die Durchlassöffnung (10) des Dichtsitzes (2) mündet, wobei die Aufhängungselemente (4) in der ersten mechanisch stabilen Form sind, und dass der Verschlusskörper (3) in einem geschlossenen Zustand des Magnetventils am Dichtsitz (3) anliegt, sodass die Durchlassöffnung (10) verschlossen ist, wobei die Aufhängungselemente (4) in der zweiten mechanisch stabilen Form sind.

4. Magnetimpulsventil nach einem der Ansprüche 1 bis 3 **dadurch gekennzeichnet, dass** die Spule (5, 8) in den Dichtsitz (2) integriert ist oder an der Außenseite des Grundkörpers (1) angebracht ist.

5. Magnetimpulsventil nach einem der Ansprüche 1 bis 4 **dadurch gekennzeichnet, dass** eine weitere Spule (9) sowie eine weitere Verengung (7) im Inneren des Grundkörpers (1) axial beabstandet vom Dichtsitz (2) vorgesehen ist, und dass der Verschlusskörper (3) zwischen dem Dichtsitz (2) und der Verengung (7) positioniert ist.

6. Magnetimpulsventil nach Anspruch 5, **dadurch gekennzeichnet, dass** die Aufhängungselemente (4) so ausgebildet sind, dass der Verschlusskörper (3) drei stabile, axial voneinander beabstandete Positionen einnehmen kann.

7. Magnetimpulsventil nach Anspruch 1 **dadurch gekennzeichnet, dass** die Antriebseinheit vom Verschlusssystem abgekoppelt und außerhalb des Leitungssystems positioniert ist.

8. Magnetimpulsventil nach einem der Ansprüche 1 bis 7 **dadurch gekennzeichnet, dass** es konstruktiv so ausgebildet ist, dass in unterschiedlichen Einbaulagen in das Leitungssystem einsetzbar ist.

## Claims

1. Impulse solenoid valve for use in pipe systems comprising
- a closure system formed by a base body (1), in which a sealing seat (2) with an axial outlet opening (10) and a magnetisable closure body (3) are located, the closure body (3) being partly made up of a permanent magnet and having outer dimensions larger than the outlet opening (10) of the sealing seat (2), whereby the base body (1) has one or a plurality of elastic suspension elements (4) inside its interior, to which the closure body (3) is fastened and moveably mounted, wherein the suspension elements (4) go over from a first mechanically stable form into a second mechanically stable form under a specific application of force,
- a drive unit which is formed by at least one coil (5,8) that generates a magnetic field acting on the closure body (3) within the base body (1),
wherein the drive unit and the closure system are built with modular design and can be installed into the pipe system separately from each other.

2. The impulse solenoid valve according to claim 1 **characterized in that** the suspension elements (4) have a geometrical shape by means of which bistable switching behaviour can be implemented.

3. The impulse solenoid valve according to claim 1 or 2, **characterized in that** the closure body (3) in an open state of the solenoid valve is axially separated from the sealing seat (2) so that a through-flow channel (11) is formed that opens into the outlet opening (10) of the sealing seat (2), wherein the suspension elements (4) are in the first mechanically stable form and the closure body (3) lies on the sealing seat (3) in a closed state of the solenoid valve so that the outlet opening (10) is closed, wherein the suspension elements (4) are in the second mechanically stable form.

4. The impulse solenoid valve according to one of the claims 1 to 3 **characterized in that** the coil (5, 8) is integrated in the sealing seat (2) or attached to the outer side of the base body (1).

5. The impulse solenoid valve according to one of the claims 1 to 4 **characterized in that** another coil (9) as well as another narrowing (7) are provided inside the base body (1) axially spaced apart from the sealing seat (2) and that the closure body (3) is positioned between the sealing seat (2) and the narrowing (7).

6. The impulse solenoid valve according to claim 5, **characterized in that** the suspension elements (4) are formed in such a way that the closure body (3) can adopt three stable positions that are axially spaced apart from one another.

7. The impulse solenoid valve according to claim 1 **characterized in that** the drive unit is decoupled from the closure system and is positioned outside the pipe system.

8. The impulse solenoid valve according to one of the claims 1 to 7 **characterized in that** it is designed in such a way that it can be used in various installation positions in the pipe system.

## Revendications

1. Vanne électromagnétique d'impulsion destinée à être utilisée dans des conduits, comprenant
- un système de fermeture, lequel est formé par un corps de base (1) dans lequel se trouvent un siège d'étanchéité (2) avec un orifice de passage (10) axial et un organe de fermeture (3) magnétisable, l'organe de fermeture (3) étant constitué au moins en partie d'un aimant permanent et présentant des dimensions extérieures supérieures à l'orifice de passage (10) du siège d'étanchéité (2), le corps de base (1) comportant dans son intérieur un ou plusieurs éléments d'accrochage (4) élastiques sur lesquels l'organe de fermeture (3) est fixé et logé de manière mobile, sous l'effet d'une force déterminée, les éléments d'accrochage (4) passant d'une première forme mécaniquement stable dans une deuxième forme mécaniquement stable,
- une unité d'entraînement, laquelle est formée par au moins une bobine (5, 8) qui dans le corps de base (1) créé un champ magnétique agissant sur l'organe de fermeture (3),
l'unité d'entraînement et le système de fermeture étant de conception modulaire et pouvant se monter séparément l'un de l'autre dans le système de conduits.

2. Vanne électromagnétique d'impulsion selon la revendication 1, **caractérisée en ce que** les éléments d'accrochage (4) présentent une forme géométrique permettant de réaliser une caractéristique de commutation bistable.

3. Vanne électromagnétique d'impulsion selon la revendication 1 ou 2, **caractérisée en ce que** dans une position ouverte de la vanne électromagnétique, l'organe de fermeture (3) est écarté en direction axiale du siège d'étanchéité (2), de sorte à former un canal de circulation (11) qui débouche dans l'orifice de passage (10) du siège d'étanchéité (2), les éléments d'accrochage (4) étant dans la première forme mécaniquement stable et **en ce que** dans une position fermée de la vanne électromagnétique, l'organe de fermeture (3) est adjacent au siège d'étanchéité (3), de sorte que l'orifice de passage (10) soit fermé, les éléments d'accrochage (4) étant dans la deuxième forme mécaniquement stable.

4. Vanne électromagnétique d'impulsion selon l'une quelconque des revendications 1 à 3, **caractérisée en ce que** la bobine (5, 8) est intégrée dans le siège d'étanchéité (2) ou est montée sur la face extérieure du corps de base (1).

5. Vanne électromagnétique d'impulsion selon l'une quelconque des revendications 1 à 4, **caractérisée en ce qu'**il est prévu une bobine (9) supplémentaire, ainsi qu'un rétrécissement (7) supplémentaire à l'intérieur du corps de base (1), avec un écart axial par rapport au siège d'étanchéité (2) et **en ce que** l'organe de fermeture (3) est positionné entre le siège d'étanchéité (2) et le rétrécissement (7).

6. Vanne électromagnétique d'impulsion selon la revendication 5, **caractérisée en ce que** les éléments d'accrochage (4) sont conçus de telle sorte que l'organe de fermeture (3) puisse adopter trois positions stables, écartées les unes des autres en direction axiale.

7. Vanne électromagnétique d'impulsion selon la revendication 1 **caractérisée en ce que** l'unité d'entraînement est désaccouplée du système de fermeture et positionnée à l'extérieur du système de conduits.

8. Vanne électromagnétique d'impulsion selon l'une quelconque des revendications 1 à 7, **caractérisée en ce qu'**elle est constructivement conçue de sorte à être insérable dans différentes positions de montage dans le système de conduits.
